# EUROPÄISCHE PATENTANMELDUNG

(11) **EP 2 251 251 A1**
(43) Veröffentlichungstag der Anmeldung: **17.11.2010**
(21) Anmeldenummer: 09006480.9
(22) Anmeldetag: 13.05.2009
(51) Int. Cl.: B62D 55/30

(54) **Kettenspannvorrichtung für ein Raupenkettenfahrwerk**

(71) Anmelder: Klemm Bohrtechnik GmbH, 57489 Drolshagen (DE)
(72) Erfinder: Käthner, Ralph, 57462 Olpe (DE)
(74) Vertreter: Wunderlich, Rainer

(57) **Zusammenfassung**

Die Erfindung betrifft eine Kettenspannvorrichtung für ein Raupenkettenfahrwerk mit zumindest zwei Raupenketten (7,7'), mit einer ersten Spanneinheit (6) zum Betätigen eines Kettenrades (2) der ersten Raupenkette (7), wobei die erste Spanneinheit (6) ein erstes Federelement (4) und einen seriell hierzu angeordneten ersten hydraulischen Spannzylinder (5) aufweist, und einer zweiten Spanneinheit (6') zum Betätigen eines Kettenrades (2') der zweiten Raupenkette (7'), wobei die zweite Spanneinheit (6') ein zweites Federelement (4') und einen seriell hierzu angeordneten zweiten hydraulischen Spannzylinder (5') aufweist. Nach der Erfindung ist vorgesehen, dass der erste Spannzylinder (5) für die erste Raupenkette (6) und der zweite Spannzylinder (5') für die zweite Raupenkette (7') über zumindest eine Koppelleitung (13) hydraulisch gekoppelt sind.

## Beschreibung

Die Erfindung betrifft eine Kettenspannvorrichtung für ein Raupenkettenfahrwerk mit zumindest zwei Raupenketten gemäß dem Oberbegriff des Anspruchs 1. Eine solche Kettenspannvorrichtung ist ausgebildet mit einer ersten Spanneinheit zum Betätigen eines Kettenrades der ersten Raupenkette, wobei die erste Spanneinheit ein erstes Federelement und einen seriell hierzu angeordneten ersten hydraulischen Spannzylinder aufweist, und einer zweiten Spanneinheit zum Betätigen eines Kettenrades der zweiten Raupenkette, wobei die zweite Spanneinheit ein zweites Federelement und einen seriell hierzu angeordneten zweiten hydraulischen Spannzylinder aufweist.

Die Erfindung liegt somit auf dem Gebiet der Raupenkettenfahrwerke, bei denen die Leiträder und somit auch die umlaufenden Fahrwerksketten über beispielsweise mit Fett- oder Öldruck beaufschlagte Spanneinrichtungen vorgespannt werden und Änderungen der Achsabstände vom Leitrad zum Antriebsrad, welche zum Beispiel durch wechselnde Betriebslasten oder durch stark verschmutzte Ketten auftreten können, durch ein nachgebendes Federelement kompensiert werden. Durch eine solche Anordnung kann Schäden an den Kettengliedern der Ketten sowie weiterer damit verbundener Bauteile durch unzulässig hohe Zugspannungen entgegengewirkt werden.

Es ist bekannt, die Leiträder eines Raupenkettenfahrwerks kettenspannkraftabhängig durch ein Federelement (beispielsweise eine Schraubenfeder, eine Tellerfeder, ein Elastomer oder ähnliche) gegenüber dem Fahrwerksträger, an welchem die Trag- und Laufrollen und insbesondere auch die Antriebseinheit mit dem Kettenturas befestigt sind, abzustützen. Dabei wird den Leiträdern durch entsprechend geformte Taschen oder Führungen im Fahrwerksträger eine Verschiebung in Längsrichtung des Fahrwerksträgers gestattet.

Weiterhin ist es bekannt, dem Federelement einen hydraulischen Spannzylinder, also eine Kolben-Zylindereinheit nachzuschalten, mit deren Hilfe eine Einstellung der Leiträder auf die gewünschte Kettenvorspannung erfolgen kann.

Überschreitet die Kettenzugkraft bei den bekannten Anordnungen die zuvor eingestellte Kettenvorspannung, was beispielsweise durch wechselnde Betriebslasten, durch Verschmutzung und/oder durch Fremdkörper in der Kette geschehen kann, so gibt das Federelement nach und das Leitrad weicht durch eine Bewegung in Richtung Turas, d.h. in Richtung Antriebsrad, aus. Hierdurch sinkt die Kettenzugkraft und unzulässig hohe, schädliche Zugspannungen in der Kette werden verhindert.

Eine Spanneinheit zum Spannen eines Kettenrades einer Raupenkette mit einem Federelement und einem seriell hierzu angeordneten hydraulischen Spannzylinder ist beispielsweise aus der WO 2008/022763 A1 bekannt. Im Falle der WO 2008/022763 A1 wird das Federelement nicht durch eine Schraubenfeder gebildet, sondern durch einen Federzylinder, welcher für eine Federwirkung mit einem Membran- oder Blasenspeicher leitungsverbunden ist. Der Federzylinder, welcher das Federelement bildet, und der Spannzylinder sind dabei konzentrisch angeordnet und bilden einen Doppelzylinder, welcher über eine Kolbenstange mit dem Leitrad in Wirkverbindung steht. Die beiden Zylinder des koaxialen Doppelzylinders können dabei von derselben Pumpe mit Hydrauliköl versorgt werden.

Die US 3,647,270 offenbart eine weitere Spanneinrichtung, bei der eine Schraubenfeder und ein Hydraulikzylinder seriell angeordnet sind. Dem Hydraulikzylinder ist dabei ein Druckspeicher zugeordnet, so dass das Hydrauliksystem eine Verschiebung des Leitrades aufnehmen kann.

Die DE 35 07 805 C2 offenbart eine weitere Spanneinheit mit einem hydraulisch gespannten Federelement, wobei das Federelement dort durch einen elastomergefüllten Kolben gebildet wird. Nach der DE 35 07 805 C2 sind ein selbsttätiges Ventil und eine Schaltung vorgesehen, welche nach dem Spannvorgang die Kettenspannung automatisch leicht reduzieren.

Die DE 32 37 336 A1 betrifft einen hydraulischen Kettenspannzylinder mit einer Ventilanordnung, welche den hydraulischen Druck im Kettenspannzylinder zwischen einem Vorspanndruck und einem maximal zulässigen Druck hält. Um mehrere Druckgrenzen verwirklichen zu können, sind dabei mehrere Druckbegrenzungsventile vorgesehen, deren Druckgrenzen entsprechend eingestellt sind.

Die DE 1 810 354 A offenbart eine selbsttätige Nachspannvorrichtung, bei der aus dem Ölkreislauf des Fahrantriebs Öl ergänzt wird, falls sich beim Ansprechen eines Überdruckventils Ölverluste im Spannsystem ergeben haben.

Die US 3,901,563 beschreibt einen weiteren hydraulischen Spannzylinder. Dieser wird mittels einer Pumpe auf Betriebsdruck gehalten. Treten beim Betrieb übermäßige Kräfte in der Kette auf, so öffnet ein Ventil am Spannzylinder und Fluid aus dem Spannzylinder wird von einem federgespannten zweiten Hydraulikzylinder zwischengespeichert, bis die übermäßig hohe Kraft wieder abgebaut ist.

**Aufgabe** der Erfindung ist es, eine Kettenspannvorrichtung anzugeben, die unter Ausnutzung des vorhandenen Bauraums einen besonders zuverlässigen Schutz vor unzulässig hohen Zugspannungen in den Fahrwerksketten bietet, und dabei auch unter den rauen Einsatzbedingungen einfach zu bedienen ist oder automatisch funktioniert, und eine besonders hohe Zuverlässigkeit und Betriebssicherheit gewährleistet.

Die Aufgabe wird nach der Erfindung durch eine Kettenspannvorrichtung mit den Merkmalen des Anspruchs 1 gelöst. Bevorzugte Ausführungsbeispiele sind in den abhängigen Ansprüchen angegeben.

Die erfindungsgemäße Kettenspannvorrichtung ist **dadurch gekennzeichnet, dass** der erste Spannzylinder für die erste Raupenkette und der zweite Spannzylinder für die zweite Raupenkette über zumindest eine Koppelleitung hydraulisch gekoppelt sind.

Ein Grundgedanke der Erfindung kann darin gesehen werden, die beiden Spannzylinder für die verschiedenen Raupenketten so zu koppeln, dass ein Fluidaustausch zwischen den Zylinderkammern der beiden Spannzylinder stattfinden kann. Durch diese erfindungsgemäße hydraulische Kopplung der Leitradspanneinheiten der beiden Fahrschiffe wird der maximal nutzbare Federweg der Federelemente vergrößert, insbesondere verdoppelt, ohne dass hierzu die äußeren Abmessungen der Federelemente vergrößert werden müssen. Denn kommt es beim Betrieb an einer der Raupenketten und somit an einer der Spanneinheiten zu einer Kraftspitze, so wird diese Kraftspitze über die hydraulische Koppelleitung von der Spanneinheit der betroffenen Raupenkette an die andere, nicht unmittelbare betroffene Spanneinheit weitergeleitet, so dass die Kraftspitze über die hydraulische Kopplung gleichzeitig auf beide Spanneinheiten wirkt. Somit federn die Federelemente beider Spanneinheiten ein, obwohl nur eine Raupenkette unmittelbar von der Kraftspitze betroffen ist. Der maximale Federweg ergibt sich somit aus der Summe der Federwege beider Federelemente, so dass insgesamt ein vergrößerter, insbesondere verdoppelter, Federweg gegeben ist. Aufgrund des vergrößerten Federweges steigt erfindungsgemäß die Sicherheit gegenüber Kettenbruch bei gleicher Baugröße der Spanneinheiten erheblich an.

Da nach der Erfindung der vergrößerte Federweg nicht durch eine Vergrößerung der Federelemente bewirkt wird, sondern durch die Kopplung zweier Spanneinheiten, wird die Baugröße der Spanneinheiten nicht beeinflusst. Überdies können die vorhandenen marktüblichen Spanneinheiten weiter verwendet werden und die Konstruktionsbaugruppe, d.h. der Fahrwerkträger, muss nicht geändert werden. Die Schaltung ist darüber hinaus in besonders einfacher Weise an vorhandenen Kettenspannvorrichtungen nachrüstbar. Hierdurch bietet die erfindungsgemäße Schaltung erhebliche Kostenvorteile. Dabei ist die erfindungsgemäße Schaltung auch besonders wartungs- und bedienerfreundlich. Da erfindungsgemäß die Federelemente hydraulisch gespannt werden, bietet die erfindungsgemäße Anordnung auch die Möglichkeit einer automatischen Verschleißnachstellung ohne Änderung der Vorspann- und Federkraft.

Die beiden Raupenketten und/oder die beiden Spanneinheiten können erfindungsgemäß auf gegenüberliegenden Seiten des Raupenkettenfahrzeugs angeordnet sein. Insbesondere können die beiden Raupenketten und damit die zugehörigen Spanneinheiten jeweils an einem unterschiedlichen Fahrschiff des Raupenkettenfahrwerks angeordnet sein. Das Raupenkettenfahrwerk bildet in geeigneter Weise den Unterwagen einer Baumaschine, insbesondere eines Bohrgerätes.

Bei dem Raupenkettenfahrwerk kann es sich um ein Pendelfahrwerk handeln, bei dem die beiden Raupenketten und vorzugsweise auch deren Spanneinheiten pendelnd gelagert sind. Die Erfindung kann aber auch bei einem starren Fahrwerk zum Einsatz kommen, bei welchem die beiden Ketten starr, also nicht-pendelnd, angeordnet sind.

Zweckmäßigerweise sind die beiden Spanneinheiten baugleich ausgebildet, wobei bei Anordnung auf gegenüberliegenden Fahrwerksseiten eine spiegelsymmetrische Anordnung erforderlich sein kann. Insbesondere kann vorgesehen sein, dass die beiden Federelemente dieselbe Federkonstante aufweisen, und dass die beiden hydraulischen Spannzylinder dieselbe Kolbenoberfläche aufweisen. Bei einer solchen konstruktiv besonders einfachen Anordnung ist der maximale Federweg verdoppelt, da sich die wirkende Kraft symmetrisch auf beide Federelemente verteilt.

Erfindungsgemäß ist es, dass die Koppelleitung für einen freien Fluidaustausch zwischen den beiden Spannzylindern durchgängig ausgebildet ist. Gemäß diesem Erfindungsgedanken sind entlang der Koppelleitung bei Betrieb insbesondere keine geschlossenen Sperr- oder Rückschlagventile vorgesehen, die ein wechselseitiges Überströmen des Druckmediums von einer Spanneinheit zur anderen verhindern. Denn ein Grundgedanke der Erfindung liegt darin, dass ein wechselseitiges Überströmen von Medium zwischen den beiden Spannzylindern zumindest zeitweise möglich ist, denn dieses wechselseitige Überströmen des Mediums koppelt auch die beiden Federelemente miteinander.

Eine bevorzugte Ausführungsform der Erfindung liegt darin, dass, zum Abführen von Fluid aus der Koppelleitung bei Überlast, die Koppelleitung mit einem vorzugsweise einstellbaren Überlast-Druckbegrenzungsventil in Leitungsverbindung steht. Hierdurch ist in besonders einfacher Weise eine einstellbare Überlastabsicherung gegeben, welche aufgrund der hydraulischen Kopplung der beiden Spannzylinder gleichzeitig für beide Spanneinheiten wirksam ist. Das Druckbegrenzungsventil wird in geeigneter Weise so eingestellt, dass es bei einem Druck öffnet, welcher beim maximalen Einfedern der Federeinheiten in der Koppelleitung herrscht, oder der etwas darunter liegt. Kann gemäß dieser Ausführungsform die Kraftspitze nicht allein durch die Federelemente aufgenommen werden, so öffnet das Überlast-Druckbegrenzungsventil, so dass Hydraulikfluid entweicht und der betroffene Spannzylinder noch weiter einfahren kann. Hierdurch kann das betroffene Kettenrad noch weiter zurückweichen, so dass die Kraftspitze abgebaut werden kann. Die erfindungsgemäße Kopplung der beiden Spanneinheiten erlaubt es dabei, mit einem einzigen Überlast-Druckbegrenzungsventil die gesamte Kettenspannvorrichtung mit beiden Spanneinheiten gegen Überlast abzusichern.

Aufgrund der hydraulischen Kopplung ermöglicht es die Erfindung überdies, beide Ketten an einer zentralen Stelle vorzuspannen, wobei beide Ketten aufgrund der Kopplung gleichmäßig vorgespannt werden. Besonders bevorzugt ist es somit, dass eine gemeinsame Befüllleitung zum Befüllen beider Spannzylinder vorgesehen ist, welche in die Koppelleitung einmündet.

Eine konstruktiv besonders einfache und zuverlässige Spannvorrichtung ist dadurch gegeben, dass von der gemeinsamen Befüllleitung eine Überlastleitung abzweigt, in welcher das Überlast-Druckbegrenzungsventil angeordnet ist. Gemäß dieser Ausführungsform dient die Befüllleitung somit einerseits zum Befüllen der Spannzylinder, d.h. zum hydraulischen Spannen, andererseits aber auch zum Abführen von Druckfluid bei einer Überlastsituation. Grundsätzlich könnte die Überlastleitung aber beispielsweise auch direkt von der Koppelleitung abzweigen.

Eine weitere bevorzugte Ausführungsform der Erfindung besteht darin, dass in der Befüllleitung ein Rückschlagventil zum Unterbinden eines Rückflusses aus der Koppelleitung angeordnet ist. Hierdurch kann automatisch verhindert werden, dass es zu einem Abbau der Kettenspannung kommt, wenn der Befüllvorgang gewollt oder ungewollt beendet wird.

Bei dem Druckmittel, mit welchem die Spannzylinder zum Spannen gefüllt werden, handelt es sich zweckmäßigerweise um ein inkompressibles Fluid. Insbesondere kann als Druckmittel ein Fett oder ein Öl vorgesehen sein.

Ein weiteres Ausführungsbeispiel der Erfindung liegt darin, dass an der Befüllleitung ein Anschluss für eine Pumpe vorgesehen ist. Weiterhin ist bevorzugt, dass die Befüllleitung mit einem vorzugsweise einstellbaren Befüll-Druckbegrenzungsventil zum Begrenzen des Befülldrucks in Leitungsverbindung steht. Beispielsweise kann zum Befüllen vorgesehen sein, am Anschluss eine Handhebelfettpresse anzuordnen. Das Befüll-Druckbegrenzungsventil, welches vorzugsweise einstellbar ist, gibt dabei den maximalen Vorspanndruck vor. Wird der gewünschte Vorspanndruck erreicht, so öffnet das Befüll-Druckbegrenzungsventil und fortan gepumptes Fluid wird über das Druckbegrenzungsventil abgeführt, anstatt in die Spannzylinder zu gelangen. Vorzugsweise ist das Druckbegrenzungsventil an einer Leitung vorgesehen, welche von der Befüllleitung abzweigt. Erfindungsgemäß ist es möglich, diese Leitung mit der Überlastleitung zu einer gemeinsamen Abführleitung zusammenzuführen.

Aufgrund der hydraulischen Kopplung der beiden Spanneinheiten ist es möglich, den maximalen Vorspanndruck für beide Ketten, beispielsweise am Befüll-Druckbegrenzungsventil, zentral einzustellen, so dass ein Überspannen der Ketten beim Vorspannen besonders zuverlässig verhindert werden kann.

Statt über eine separate Pumpe oder zusätzlich hierzu können die Spannzylinder erfindungsgemäß auch von einem Hydraulikkreis gespeist werden, welcher an der Baumaschine, an der das Raupenkettenfahrwerk angeordnet ist, bereits für einen anderen Zweck vorhanden ist. Beispielsweise kann es sich bei diesem Hydraulikkreis um den Antriebskreis handeln, mit welchem der oder die Antriebsmotoren der Raupenketten betrieben werden. Demgemäß ist es besonders vorteilhaft, dass die Befüllleitung mit einem Hydraulikkreis der Baumaschine gekoppelt ist.

Insbesondere in diesem Zusammenhang ist es vorteilhaft, dass in der Befüllleitung ein vorzugsweise einstellbares Druckregelventil vorgesehen ist. Dieses Ventil kann insbesondere dann vorgesehen sein, wenn das Druckniveau des Hydraulikkreises höher als der am Befüll-Druckbegrenzungsventil eingestellte Druck ist. Durch das Druckregelventil, das oberstromig des Befüll-Druckbegrenzungsventils angeordnet ist, können unerwünschte Druck- und Volumenstromverluste vermieden werden. Sofern ein Befüllen ausschließlich über den Hydraulikkreis erfolgt, kann das Befüll-Druckbegrenzungsventil auch entfallen, da in diesem Falle der Spanndruck über das Druckregelventil vorgegeben werden kann.

Besonders zweckmäßig ist es weiterhin, dass zumindest eines der Federelemente eine Schraubenfeder oder/und ein Elastomerelement aufweist. Grundsätzlich kann aber auch eine Tellerfeder oder eine Fluiddruckfeder vorgesehen sein, wobei sich beim letztgenannten Federtyp die Federwirkung durch eine Kombination eines Hydraulikzylinders mit einem Druckspeicher ergibt. Grundsätzlich können die Federelemente jeweils auch mehrere dieser Federtypen aufweisen. Besonders bevorzugt ist es, dass die beiden Federelemente denselben Federtyp aufweisen. Erfindungsgemäß stützen sich die Spanneinheiten auf der einen Seite am Fahrwerksträger und auf der anderen Seite an der jeweiligen Kettenradaufnahme und somit am jeweiligen Kettenrad ab. Beispielsweise können sich die Spanneinheiten auf der einen Seite am jeweiligen Fahrschiff und auf der anderen Seite an der jeweiligen Kettenradaufnahme abstützen. Erfindungsgemäß befinden sich somit sowohl das Federelement als auch der Spannzylinder kräftemäßig zwischen dem Fahrwerksträger und dem jeweiligen Kettenrad, d.h. die Kraftübertragung zwischen Kettenrad und Fahrwerksträger erfolgt seriell über das Federelement und den Spannzylinder. Erfindungsgemäß sind die Federelemente durch Betätigen des jeweiligen Spannzylinders verschiebbar.

Besonders bevorzugt ist es, dass der erste Spannzylinder über das erste Federelement mit dem Kettenrad der ersten Raupenkette in Wirkverbindung steht, so dass das erste Federelement Kräfte vom ersten Spannzylinder auf das erste Kettenrad überträgt, und dass der zweite Spannzylinder über das zweite Federelement mit dem Kettenrad der zweiten Raupenkette in Wirkverbindung steht, so dass das zweite Federelement Kräfte vom zweiten Spannzylinder auf das zweite Kettenrad überträgt. Gemäß dieser Ausführungsform sind die Federelemente den jeweiligen Kettenrädern und den jeweiligen Spannzylindern zwischengeschaltet. Insbesondere kann erfindungsgemäß vorgesehen sein, dass die Federelemente durch Betätigen des jeweiligen Spannzylinders relativ zum Fahrwerksträger beweglich sind. Gemäß dieser Ausführungsform können die hydraulischen Spannzylinder stationär am Fahrwerksträger vorgesehen werden, so dass keine beweglichen Hydraulikleitungen erforderlich sind. Besonders vorteilhaft ist es, dass die Zylindergehäuse der Spannzylinder fest am Fahrwerksträger angeordnet sind.

Eine besonders kompakte Bauform kann dadurch erhalten werden, dass das erste Federelement in einem Kolben des ersten Spannzylinders angeordnet ist, und/oder dass das zweite Federelement in einem Kolben des zweiten Spannzylinders angeordnet ist. Beispielsweise können Hohlkolben vorgesehen sein, in denen die Schraubenfedern oder die Elastomerelemente der Federelemente zumindest bereichsweise angeordnet sind.

Im Hinblick auf den konstruktiven Aufwand ist es besonders vorteilhaft, dass die Kettenräder, welche mit den Spanneinheiten gespannt werden, die Leiträder des Raupenfahrwerks sind. Grundsätzlich kann aber auch erwogen werden, mittels der Spanneinheiten die Antriebskettenräder relativ zum Fahrwerksträger zu verstellen.

Die Erfindung betrifft auch ein Raupenkettenfahrwerk mit einer erfindungsgemäßen Kettenspannvorrichtung, sowie eine Baumaschine mit einem Raupenkettenfahrwerk mit einer erfindungsgemäßen Kettenspannvorrichtung. Bei der Baumaschine kann es sich insbesondere um ein Bohrgerät handeln. Auch betrifft die Erfindung ein Verfahren zum Betrieb einer erfindungsgemäßen Kettenspannvorrichtung, bei dem bei Belastung einer Raupenkette über die Koppelleitung Fluid zwischen dem ersten Spannzylinder und dem zweiten Spannzylinder ausgetauscht wird. Durch diesen Fluidaustausch wird die Belastung der Raupenkette auf beide Spanneinrichtungen, insbesondere auf beide Federelemente, verteilt, so dass der Federweg vergrößert ist.

Die Erfindung wird nachfolgend anhand bevorzugter Ausführungsbeispiele näher erläutert, welche schematisch in den beiliegenden Figuren dargestellt sind. In den Figuren zeigen:
- Fig. 1: eine Seitenansicht eines Bohrgerätes mit einem Raupenkettenfahr- werk, an welchem eine erfindungsgemäße Kettenspannvorrichtung vorgesehen werden kann;
- Fig. 2: eine Draufsicht auf das Bohrgerät der Fig. 1;
- Fig. 3: eine vergrößerte Detailansicht des linken Fahrschiffs des Bohrgerä- tes der Figuren 1 und 2;
- Fig. 4: eine teilgeschnittene, vergrößerte Detailansicht der Fahrschiffe des Bohrgeräts der Figuren 1 und 2 im Bereich der Spanneinheiten im vorgespannten Zustand bei neutraler Belastung;
- Fig. 5: die Ansicht aus Fig. 4 bei Zugbelastung einer der beiden Raupenket- ten und damit erzwungenem Eintauchen eines Leitrades;
- Fig. 6: eine Fahrwerksseite bei beginnender Überlaststellung;
- Fig. 7: eine Fahrwerksseite im mechanisch begrenzten Endzustand der Überlaststellung;
- Fig. 8: das hydraulische Schaltungsschema einer erfindungsgemäßen Ket- tenspannvorrichtung gemäß einer ersten Ausführungsform bei kor- rekt vorgespannter Kette im normalen Betriebszustand; und
- Fig. 9: das hydraulische Schaltungsschema einer erfindungsgemäßen Ket- tenspannvorrichtung gemäß einer zweiten Ausführungsform bei ein- seitigem Anstieg der Kettenzugkraft.

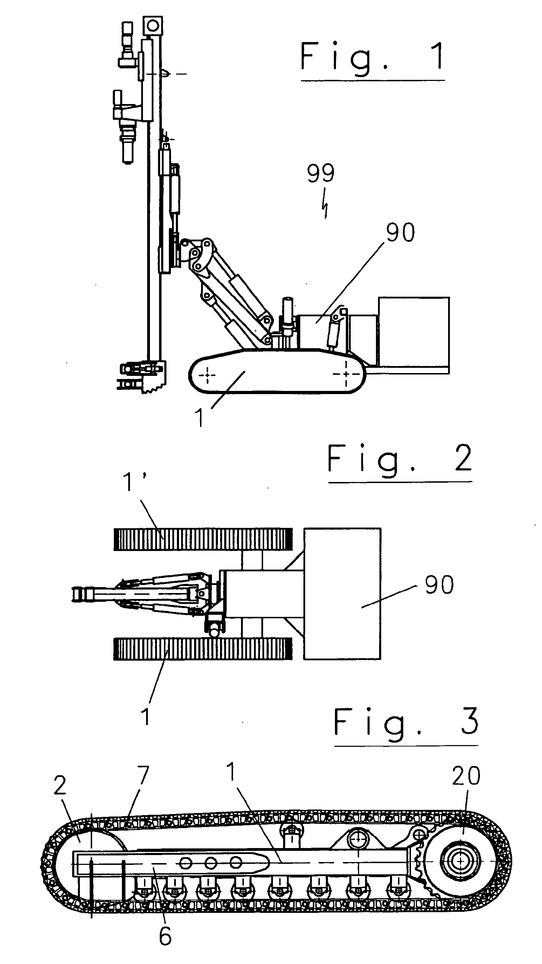

Die Figuren 1 und 2 zeigen eine als Bohrgerät ausgebildete Baumaschine 99 mit einem Raupenkettenfahrwerk, an dem eine erfindungsgemäße Kettenspannvorrichtung vorgesehen werden kann. Die Baumaschine 99 weist einen Aufbau (Oberwagen) 90 auf, an dem eine als solche bekannte Erd- und Gesteinsbohrvorrichtung vorgesehen ist. Links- und rechtsseitig am Aufbau 90 sind zwei Fahrschiffe 1 beziehungsweise 1' vorgesehen, welche den Fahrwerkträger bilden. Im dargestellten Ausführungsbeispiel sind die beiden Fahrschiffe 1, 1' pendelnd ausgebildet. Die Erfindung kann aber auch bei starr angeordneten Fahrwerken zum Einsatz kommen.

Fig. 3 zeigt das linksseitige Fahrschiff 1 der Figuren 1 und 2 in einer vergrößerten Ansicht. Das zweite Fahrschiff 1' ist analog, insbesondere spiegelsymmetrisch, ausgebildet. An den gegenüberliegenden Enden des Fahrschiffs 1 sind ein Antriebskettenrad (Turas) 20 beziehungsweise ein als Leitrad ausgebildetes Kettenrad 2 vorgesehen. Die beiden Kettenräder 2, 20 werden von einer Raupenkette 7 umlaufen. Das Antriebskettenrad 20 wird von einem nicht dargestellten Drehantrieb angetrieben. Zur Führung der Raupenkette 7 am Fahrschiff 1 sind überdies mehrere Trag- und Laufrollen vorgesehen.

Am Fahrschiff 1 ist eine im Folgenden näher beschriebene Spanneinheit 6 angeordnet. Diese Spanneinheit 6 erlaubt es, die Position des Leitrades 2 relativ zum Fahrschiff 1 und somit dem Antriebskettenrad 20 zu variieren, also den Achsabstand zwischen dem Leitrad 2 und dem Antriebskettenrad 20 zu variieren, und damit die Raupenkette 7 zu spannen.

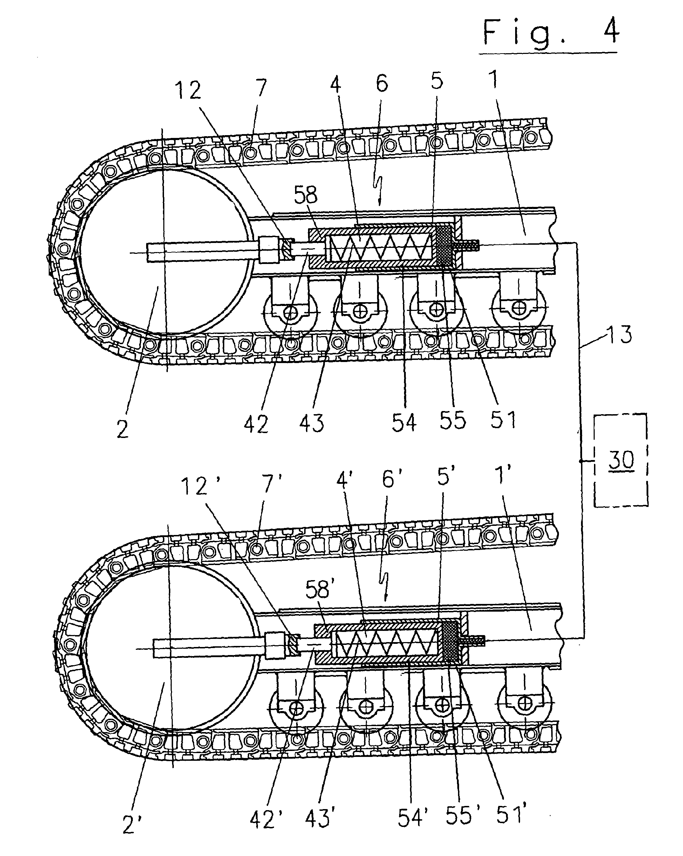

Der detaillierte Aufbau der Spanneinheit 6 ist in Fig. 4 gezeigt, wobei Fig. 4 sowohl das linksseitige Fahrschiff 1 als auch das rechtsseitige Fahrschiff 1' in Teilschnittansicht zeigt. Da die beiden Fahrschiffe 1 und 1' analog aufgebaut sind, wird im Folgenden lediglich das linksseitige Fahrschiff 1 im Detail beschrieben. Das rechtsseitige Fahrschiff 1' weist dieselben Elemente auf wie das linksseitige Fahrschiff 1. Im Falle des rechtsseitigen Fahrschiffes 1' werden somit für dieselben Bauteile gleiche, jedoch apostrophierte Bezugszeichen verwendet.

Wie Fig. 4 zeigt, weist die Spanneinheit 6 ein Federelement 4 sowie einen hydraulischen Spannzylinder 5 auf, welche seriell angeordnet sind. Der Spannzylinder 5 ist am Fahrschiff 1 und somit am Fahrwerkträger angeordnet. Er erlaubt es, das Federelement 4 relativ zum Fahrschiff 1 zu verfahren. Am Federelement 4 wiederum ist eine Leitradaufnahme 12 angeordnet, an der das Leitrad 2 vorgesehen ist. Wird somit durch Ausfahren des Spannzylinders 5 das Federelement 4 vorgeschoben, wird hierbei auch die Leitradaufnahme 12 und somit das Leitrad 2 bewegt, so dass die Kette 7 gespannt werden kann. Die Kraftübertragung zwischen dem Spannzylinder 5 und dem Kettenrad 2 erfolgt dabei über das Federelement 4, so dass das Federelement 4 die Kraftübertragung bedämpfen kann.

Der Spannzylinder 5 weist ein Zylindergehäuse 51 auf, welches fest am Fahrschiff 1 angeordnet ist. In diesem Zylindergehäuse 51 ist ein Kolben 54 verschiebbar angeordnet. Zwischen dem Kolben 54 und dem Zylindergehäuse 51 ist die Zylinderkammer 55 des Spannzylinders 5 ausgebildet.

Im Inneren des Kolbens 54 ist im dargestellten Ausführungsbeispiel eine Schraubenfeder 43 des Federelements 4 vorgesehen. Diese Schraubenfeder 43 stützt sich auf ihrer einen, dem Zylindergehäuse 51 zugewandten Seite am Kolben 54 ab. Auf ihrer anderen Seite stützt sich die Schraubenfeder 43 des Federelements 4 an einem Kolben 42 des Federelements 4 ab. Dieser Kolben 42 ist wiederum mit der Leitradaufnahme 12 verbunden. Auf seiner dem Zylindergehäuse 51 abgewandten Seite weist der Kolben 54 des Spannzylinders 5 eine Verjüngung 58 auf, die den Kolben 42 führt. Dabei bildet die Verjüngung 58 einen Anschlag, der verhindert, dass der Kolben 42 des Federelements 4 aus dem Kolben 54 des Spannzylinders 5 austreten kann. Zu diesem Zweck weist der Kolben 42 eine endseitige Verbreiterung auf, die bei maximal entspannter Schraubenfeder 43 an der Verjüngung 58 anliegt.

Der Spannzylinder 5 und das Federelement 4 sind so angeordnet, dass ihre Längsachsen koaxial auf einer Verbindungslinie zwischen dem Antriebskettenrad 20 und dem Leitrad 2 liegen, so dass die Spannkräfte besonders einfach aufgenommen werden können. Anstelle einer Schraubenfeder 43 kann im Kolben 54 beispielsweise auch ein Elastomerelement vorgesehen sein.

Die Zylinderkammer 55 des ersten (linksseitigen) Fahrschiffes 1 ist mit der Zylinderkammer 55' des zweiten (rechtsseitigen) Fahrschiffes 1' über eine Koppelleitung 13 leitungsverbunden, so dass die beiden Spannzylinder 5 und 5' hydraulisch gekoppelt sind. Die Koppelleitung 13 ist durchgängig ausgebildet, das heißt es sind keine Ventile vorgesehen, so dass ein freier Fluidaustausch zwischen den beiden Zylinderkammern 55 und 55' möglich ist. Zum Zuführen von Fluid in die Zylinderkammern 55 und 55' beim Spannen der Spanneinheiten 6 und 6', und zum Abführen von Fluid bei einer Überdrucksituation ist an der Koppelleitung 13 eine Versorgungseinrichtung 30 angeordnet, die nachfolgend im Detail beschrieben wird.

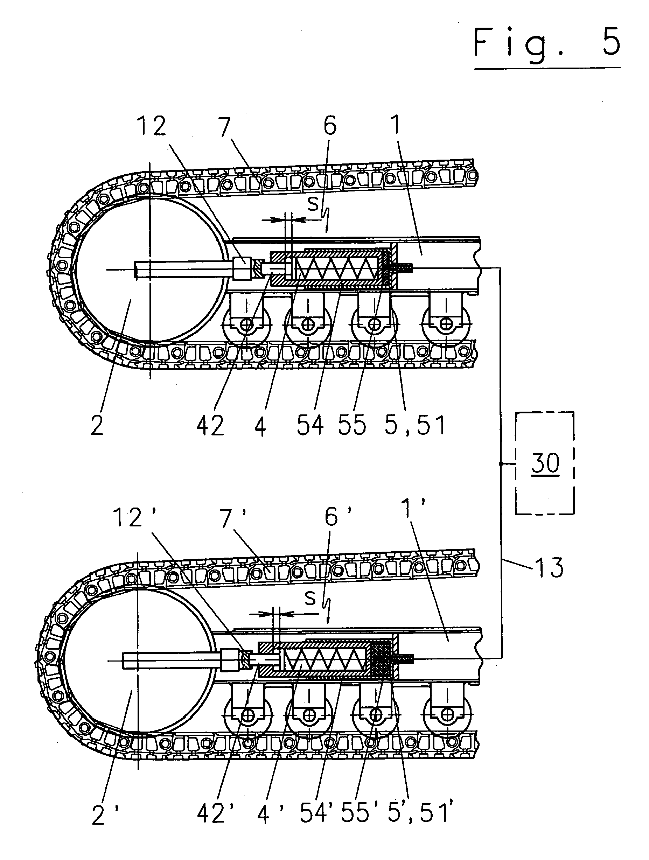

Die Figuren 5 bis 7 zeigen die Anordnung der Fig. 4 in unterschiedlichen Betriebszuständen, die weiter unten im Detail erläutert werden.

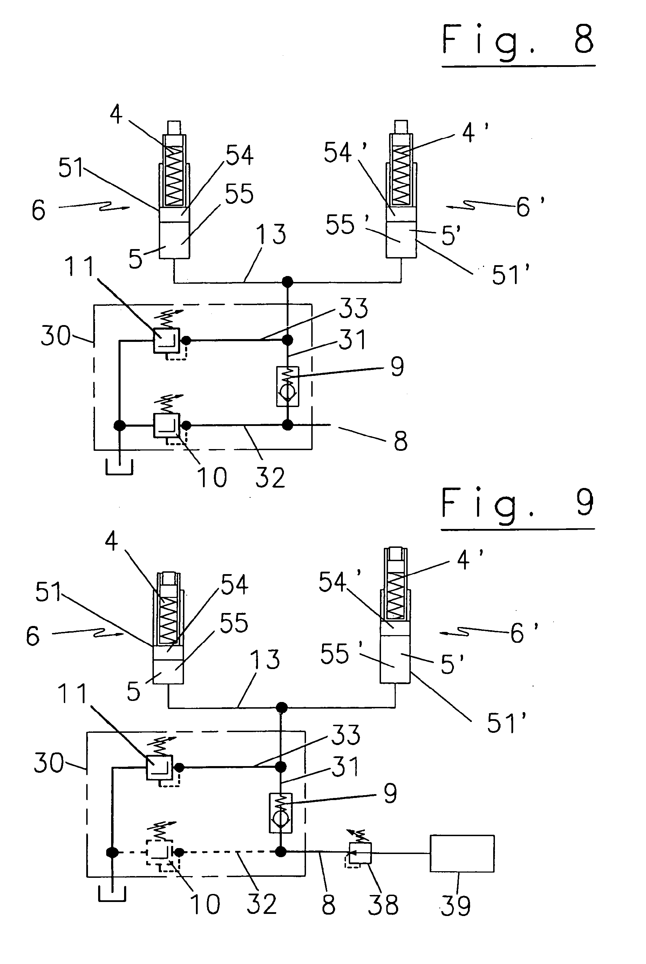

Fig. 8 zeigt die hydraulische Schaltung einer erfindungsgemäßen Kettenspannvorrichtung, insbesondere ihrer Versorgungseinrichtung 30, gemäß einer ersten Ausführungsform. Zum gemeinsamen Füllen der Zylindergehäuse 51, 51' der Spannzylinder 5, 5' mit einem Druckmittel, beispielsweise Fett oder Öl, zum Spannen der Spanneinheiten 6, 6' ist eine Befüllleitung 31 vorgesehen, welche in die Koppelleitung 13 zwischen den beiden Zylinderkammern 55, 55' einmündet. An ihrem der Koppelleitung 13 abgewandten Ende ist an der Befüllleitung 31 ein Anschluss 8 vorgesehen, an welchem zum Befüllen eine Pumpe angeschlossen werden kann. Beispielsweise kann am Anschluss 8 eine Handhebelfettpresse angeschlossen werden. In der Befüllleitung 31 ist ein Rückschlagventil 9 vorgesehen, welches einen Rückfluss von Druckmedium aus den Zylinderkammern 55, 55' zum Anschluss 8 verhindert. Zwischen dem Anschluss 8 und dem Rückschlagventil 9 zweigt von der Befüllleitung 31 eine Leitung 32 ab, die zu einem drucklosen Hydrauliktank führt. In der Leitung 32 ist ein einstellbares Druckbegrenzungsventil 10 angeordnet. Über dieses Druckbegrenzungsventil 10 kann der Maximaldruck eingestellt werden, unter dem Fluid zu den Spannzylindern 5, 5' zuführbar ist. Somit begrenzt das Druckbegrenzungsventil 10 die maximale Vorspannkraft.

Zwischen der Koppelleitung 13 und dem Rückschlagventil 9 zweigt von der Befüllleitung 31 eine Überlastleitung 33 ab. In dieser Überlastleitung 33, welche ebenfalls zum drucklosen Tank führt, und welche hierzu mit der Leitung 32 zusammengeführt ist, ist ein einstellbares Überlast-Druckbegrenzungsventil 11 angeordnet. Dieses Überlast-Druckbegrenzungsventil 11 öffnet, wenn in den Spannzylindern 5 und/oder 5' eine Überlastsituation herrscht. Somit wird das Überlast-Druckbegrenzungsventil 11 in der Regel einen höheren Schaltdruck aufweisen als das Befüll-Druckbegrenzungsventil 10. Treten an den Spanneinheiten 6, 6' derart hohe Kräfte auf, dass diese nicht mehr von den Federelementen 4, 4' aufgenommen werden können, da die Federelemente 4, 4' maximal einfedern, droht also eine Überlastung der Federelemente 4, 4', so öffnet das Überlast-Druckbegrenzungsventil 11. Hierdurch kann Öl aus den Zylinderkammern 55, 55' abfließen, so dass der von der Kraftspitze betroffene Kolben 54 oder 54' zum Abbau der Kräfte noch weiter zurückweichen kann, als es die Federelemente 4, 4' nur aufgrund der Federwirkung zulassen. Somit kann auch bei ungewöhnlichen Betriebssituationen eine Beschädigung der Raupenketten 7, 7' verhindert werden.

Fig. 9 zeigt ein Hydraulikschaltbild eines weiteren Ausführungsbeispiels, welches sich vom Ausführungsbeispiel der Fig. 8 insbesondere durch die Ölversorgung unterscheidet. Gemäß dem Ausführungsbeispiel der Fig. 9 wird der Anschluss 8 zum Befüllen der Zylinderkammern 55, 55' an einem lediglich schematisch dargestellten Hydraulikkreis 39 der Baumaschine 99 angeschlossen. Bei diesem Hydraulikkreis 39 kann es sich insbesondere um einen Hydraulikkreis handeln, der in der Baumaschine 99 ohnehin vorhanden ist, beispielsweise um den Antriebskreis für die Antriebskettenräder 20 oder für den Bohrmaschinenaufbau 90. Die Kopplung mit dem Hydraulikkreis 39 erlaubt ein automatisches Befüllen und somit ein automatisches Vorspannen der Raupenketten 7, 7', was insbesondere dann vorteilhaft ist, wenn bei häufiger Überlastung Öl oder Fett über das Überdruck-Druckbegrenzungsventil ins Freie beziehungsweise in den Tank gelangt und somit den Spanneinheiten 6, 6' zunächst verloren geht. Das verlorene Öl wird über den Hydraulikkreis 39 automatisch ersetzt, ohne dass hierzu händisch gepumpt werden müsste.

Grundsätzlich könnte auch bei einer Kopplung mit dem Hydraulikkreis 39 die Einstellung des Befülldrucks über das Druckbegrenzungsventil 10 erfolgen. Dies würde jedoch mit unter Umständen unerwünschten Druck- und/oder Volumenstromverlusten aus dem Hydraulikkreis 39 über die Leitung 32 einhergehen, wenn das Druckniveau des Hydraulikkreises 39 höher als der am Druckbegrenzungsventil 10 eingestellte Druck ist. Von daher ist es vorteilhaft den Hydraulikkreis 39 wie in Fig. 9 dargestellt über ein einstellbares Druckregelventil 38 mit der Befüllleitung 31 zu koppeln. In diesem Fall kann die Einstellung des Befülldrucks über das Druckregelventil 38 erfolgen und das Druckbegrenzungsventil 10 sowie die Leitung 32 können entfallen. Diese Elemente sind daher in Fig. 9 mit Strichlinien dargestellt. Es kann allerdings auch vorgesehen sein, die Spannzylinder 5, 5' sowohl über den Hydraulikkreis 39 als auch im Einzelfall manuell, beispielsweise über eine Handhebelpresse, zu befüllen. Insbesondere in diesem Fall können die Leitung 32 und das Druckbegrenzungsventil 10 auch in der Schaltung belassen werden und für die Druckeinstellung verwendet werden, wenn an Stelle des Hydraulikkreises 39 eine Handpumpe am Anschluss 8 angeordnet wird.

Die in den Figuren gezeigte Kettenspannvorrichtung kann wie folgt betrieben werden:

Zum Vorspannen der Ketten 7, 7' wird über die Versorgungseinrichtung 30 beispielsweise aus einer Handhebelfettpresse (Fig. 8) oder dem Hydraulikkreis 39 der Baumaschine 99 (Fig. 9) Druckmittel zugeführt, welches über den Füllanschluss 8 und das nachgeschaltete Rückschlagventil 9 in die Koppelleitung 13 und von dort in die Zylindergehäuse 51, 51' strömt. Die Kolben 54, 54' beider Spanneinheiten 6, 6' fahren hierdurch aus und verschieben dabei über die Federelemente 4, 4', welche in den Kolben 54, 54' integriert sind, die Leiträder 2, 2' gleichmäßig nach vorne. Die beiden Ketten 7 und 7' werden somit gleichzeitig und gleichmäßig vorgespannt. Dieser Zustand ist in den Figuren 4 und 8 dargestellt. Bei angenommener gleicher Kettenlänge der beiden Ketten 7, 7' sind die Zylinderkammern 55, 55' der beiden Fahrschiffe 1, 1' dabei mit demselben Volumen gefüllt, so dass die über die Federelemente 4, 4' auf die Raupenketten 7, 7' ausgeübten Kräfte in beiden Fällen gleich groß sind. Sind die Ketten 7, 7' etwas unterschiedlich lang, können sich für dieselben Spannkräfte unterschiedliche Füllvolumina in den beiden Zylinderkammern 55, 55' ergeben, die aufgrund der hydraulischen Kopplung über die Koppelleitung 13 jedoch automatisch beim Füllen eingestellt werden.

Die Figuren 5 und 9 zeigen die erfindungsgemäße Vorrichtung in der sogenannten Schwimmstellung bei erhöhter Krafteinwirkung beispielsweise auf das Leitrad 2. Bei erhöhter Krafteinwirkung auf das Leitrad 2 in Kettenzugrichtung erhöht sich der Druck im Zylindergehäuse 51 der zugehörigen Spanneinheit 6. Übersteigt die Kraft die Vorspannkraft des Federelementes 4, dann fährt dieses um die Strecke S ein. Gleichzeitig fährt der Kolben 54 des zugehörigen Spannzylinders 5 ein. Das verdrängte Druckmittel fließt über die Koppelleitung 13 in das Zylindergehäuse 51' der zweiten Spanneinheit 6' am gegenüberliegenden Fahrschiff 1' auf der geringer belasteten Fahrwerksseite. Der Kolben 54' der Spanneinheit 6' auf der geringer belasteten Fahrwerksseite weicht aus, wodurch das Federelement 4' der geringer belasteten Fahrwerksseite um das gleiche Maß S einfährt wie das Federelement 4 auf der unmittelbar belasteten Seite. Die einseitige Belastung wird somit durch beide Federelemente 4 und 4' aufgenommen, so dass der potenziell zur Verfügung stehende Federweg gegenüber einer ungekoppelten Anordnung verdoppelt ist.

Die "Schwimmstellung" bei einseitigem Anstieg der Kettenzugkraft und damit erzwungenem Eintauchen eines Leitrades 2 ist auch in Fig. 9 dargestellt.

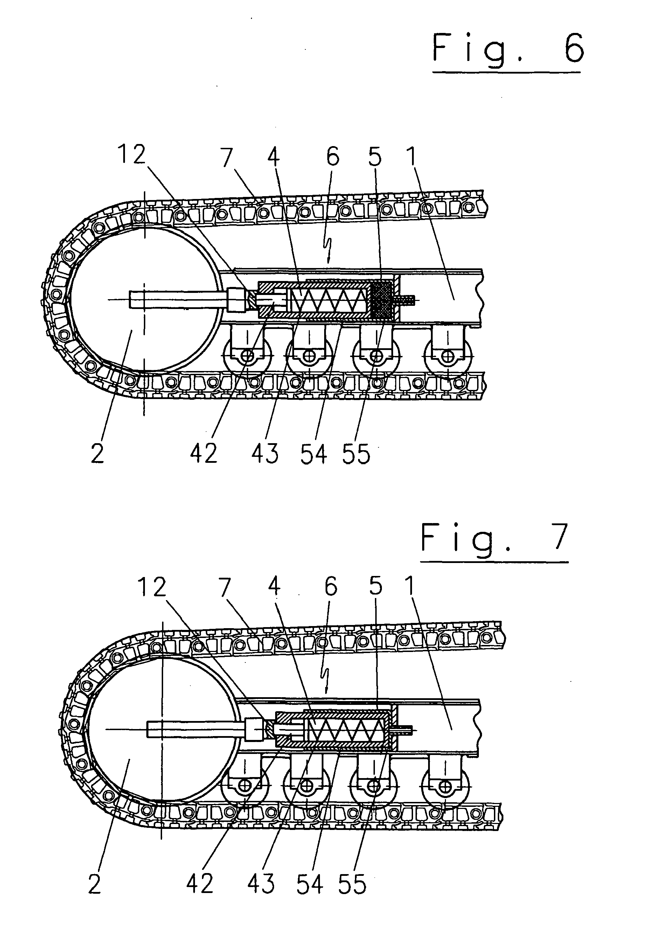

Die Figuren 6 und 7 zeigen eine Fahrwerksseite bei Überlast des Federelementes 4, wobei Fig. 6 den Beginn der Überlaststellung und Fig. 7 den mechanisch begrenzten Endzustand der Oberlaststellung zeigt.

Kommt es aufgrund erhöhter Krafteinwirkung in Kettenzugrichtung zu einem vollständigen Einfedern der Federelemente 4, 4', das heißt sind die Federwege beider Federelemente zu 100% ausgenutzt, dann stützen sich die Leitradaufnahmen 12 und 12' auf den Kolben 54 und 54' der beiden Spannzylinder 5 und 5' ab. Dieser Zustand ist in Fig. 6 dargestellt.

Steigt die Krafteinwirkung weiter an, so steigt der Druck in den Zylinderkammern 55 und 55'. Übersteigt der Druck in den Zylinderkammern 55 und 55' den am Überlast-Druckbegrenzungsventil 11 eingestellten Druck, so öffnet das Druckbegrenzungsventil 11 und entlastet die Zylinderkammern 55 und 55'. Der belastete Kolben 54 kann weiter einfahren und das belastete Leitrad 2 kann in Kettenzugrichtung weiter ausweichen, um die Kraft abzubauen.

Die Spanneinheit 6 kann somit auch bei vollständig eingefedertem Federelement 4 so lange weiter einfahren, bis der Kolben 54 am Zylindergehäuse 51 aufsteht und die Zylinderkammer 55 vollständig leer gedrückt ist. Der letztgenannte Zustand, bei dem die Überlaststellung mechanisch begrenzt ist und die maximale Auslenkung und der maximale Ausgleich der gekoppelten Zylinderkammern 55 und 55' erschöpft ist, ist in Fig. 7 dargestellt.

## Patentansprüche

1. Kettenspannvorrichtung für ein Raupenkettenfahrwerk mit zumindest zwei Raupenketten (7, 7'), mit
- einer ersten Spanneinheit (6) zum Betätigen eines Kettenrades (2) der ersten Raupenkette (7), wobei die erste Spanneinheit (6) ein erstes Federelement (4) und einen seriell hierzu angeordneten ersten hydraulischen Spannzylinder (5) aufweist, und
- einer zweiten Spanneinheit (6') zum Betätigen eines Kettenrades (2') der zweiten Raupenkette (7'), wobei die zweite Spanneinheit (6') ein zweites Federelement (4') und einen seriell hierzu angeordneten zweiten hydraulischen Spannzylinder (5') aufweist,
**dadurch gekennzeichnet,**
- **dass** der erste Spannzylinder (5) für die erste Raupenkette (7) und der zweite Spannzylinder (5') für die zweite Raupenkette (7') über zumindest eine Koppelleitung (13) hydraulisch gekoppelt sind.

2. Kettenspannvorrichtung nach Anspruch 1,
**dadurch gekennzeichnet,**
**dass** die Koppelleitung (13) für einen freien Fluidaustausch zwischen den beiden Spannzylindern (5, 5') durchgängig ausgebildet ist.

3. Kettenspannvorrichtung nach einem der vorstehenden Ansprüche,
**dadurch gekennzeichnet,**
**dass,** zum Abführen von Fluid aus der Koppelleitung (13) bei Überlast, die Koppeleitung (13) mit einem Überlast-Druckbegrenzungsventil (11) in Leitungsverbindung steht.

4. Kettenspannvorrichtung nach einem der vorstehenden Ansprüche,
**dadurch gekennzeichnet,**
**dass** eine gemeinsame Befüllleitung (31) zum Befüllen beider Spannzylinder (5, 5') vorgesehen ist, welche in die Koppeleitung (13) einmündet.

5. Kettenspannvorrichtung nach Anspruch 3 und 4,
**dadurch gekennzeichnet,**
**dass** von der gemeinsamen Befüllleitung (31) eine Überlastleitung (33) abzweigt, in welcher das Überlast-Druckbegrenzungsventil (11) angeordnet ist.

6. Kettenspannvorrichtung nach einem der Ansprüche 4 oder 5,
**dadurch gekennzeichnet,**
**dass** in der Befüllleitung (31) ein Rückschlagventil (9) zum Unterbinden eines Rückflusses aus der Koppelleitung (13) angeordnet ist.

7. Kettenspannvorrichtung nach einem der Ansprüche 4 bis 6,
**dadurch gekennzeichnet,**
- **dass** an der Befüllleitung (31) ein Anschluss (8) für eine Pumpe vorgesehen ist, und
- **dass** die Befüllleitung (31) mit einem Befüll-Druckbegrenzungsventil (10) zum Begrenzen des Befülldrucks in Leitungsverbindung steht.

8. Kettenspannvorrichtung nach einem der Ansprüche 4 bis 7,
**dadurch gekennzeichnet,**
- **dass** die Befüllleitung (31) mit einem Hydraulikkreis (39) einer Baumaschine gekoppelt ist, und
- **dass** in der Befüllleitung (31) ein Druckregelventil (38) vorgesehen ist.

9. Kettenspannvorrichtung nach einem der vorstehenden Ansprüche,
**dadurch gekennzeichnet,**
**dass** zumindest eines der Federelemente (4, 4') eine Schraubenfeder (43) oder/und ein Elastomerelement aufweist.

10. Kettenspannvorrichtung nach einem der vorstehenden Ansprüche,
**dadurch gekennzeichnet,**
- **dass** der erste Spannzylinder (5) über das erste Federelement (4) mit dem Kettenrad (2) der ersten Raupenkette (7) in Wirkverbindung steht, so dass das erste Federelement (4) Kräfte vom ersten Spannzylinder (5) auf das erste Kettenrad (2) überträgt, und
- **dass** der zweite Spannzylinder (5') über das zweite Federelement (4') mit dem Kettenrad (2') der zweiten Raupenkette (7') in Wirkverbindung steht, so dass das zweite Federelement (4') Kräfte vom zweiten Spannzylinder (5') auf das zweite Kettenrad (2') überträgt.

11. Kettenspannvorrichtung nach einem der vorstehenden Ansprüche,
**dadurch gekennzeichnet,**
- **dass** das erste Federelement (4) in einem Kolben (54) des ersten Spannzylinders (5) angeordnet ist, und
- **dass** das zweite Federelement (4') in einem Kolben (54') des zweiten Spannzylinders (5') angeordnet ist.

12. Kettenspannvorrichtung nach einem der vorstehenden Ansprüche,
**dadurch gekennzeichnet,**
**dass** die Kettenräder (2, 2') die Leiträder des Raupenkettenfahrwerks sind.

13. Raupenkettenfahrwerk mit einer Kettenspannvorrichtung nach einem der vorstehenden Ansprüche.

14. Baumaschine (99), insbesondere Bohrgerät, mit einem Raupenkettenfahrwerk mit einer Kettenspannvorrichtung nach einem der Ansprüche 1 bis 12.

15. Verfahren zum Betrieb einer Kettenspannvorrichtung nach einem der Ansprüche 1 bis 12, bei dem bei Belastung einer Raupenkette (7, 7') über die Koppelleitung (13) Fluid zwischen dem ersten Spannzylinder (5) und dem zweiten Spannzylinder (5') ausgetauscht wird.
